# EUROPÄISCHE PATENTSCHRIFT

(11) **EP 3 371 988 B1**
(45) Veröffentlichungstag und Bekanntmachung des Hinweises auf die Patenterteilung: **13.03.2019**
(21) Anmeldenummer: 17715425.9
(22) Anmeldetag: 29.03.2017
(51) Int. Cl.: H04W 4/44

(54) **KRAFTFAHRZEUG-STEUERVORRICHTUNG UND VERFAHREN ZUM ÜBERWACHEN EINER MOBILEN INTERNETVERBINDUNG SOWIE KRAFTFAHRZEUG**
CONTROLLER IN A CAR, METHOD FOR MONITORING A MOBILE INTERNET CONNECTION, AND CAR
DISPOSITIF DE COMMANDE DE VÉHICULE ET PROCÉDÉ POUR SURVEILLER UNE LIAISON INTERNET MOBILE ET VÉHICULE

(30) Priorität: 14.06.2016 DE 102016007183
(43) Veröffentlichungstag der Anmeldung: 12.09.2018
(73) Patentinhaber: Audi AG, 85045 Ingolstadt (DE)
(72) Erfinder: ROTTENKOLBER, Tobias, 85092 Kösching (DE)
(86) Internationale Anmeldenummer: PCT/EP2017/057466
(87) Internationale Veröffentlichungsnummer: WO 2017/215802

(56) Entgegenhaltungen:
- EP-A1- 2 814 268
- US-A1- 2010 167 737
- US-A1- 2010 172 312
- US-A1- 2013 080 618

## Beschreibung

Die Erfindung betrifft ein Verfahren zum Überwachen einer Internetverbindung, die in einem Kraftfahrzeug mittels einer Mobilfunkverbindung bereitgestellt ist, die zwischen dem Kraftfahrzeug und einem Mobilfunknetzwerk aufgebaut ist. Zu der Erfindung gehört auch eine Steuervorrichtung zum Durchführen des Verfahrens. Schließlich gehört zu der Erfindung auch ein Kraftfahrzeug, welches die erfindungsgemäße Steuervorrichtung aufweist.

In einem Kraftfahrzeug kann ein Mobilfunkmodul bereitgestellt sein, welches auf der Grundlage einer SIM-Karte (SIM - Subscriber Identification Module) eine Internetverbindung zu einem Mobilfunknetzwerk betreiben oder bereitstellen kann. Über eine solche Mobilfunkverbindung kann auch eine sogenannte Datenverbindung geführt sein, über welche wiederum eine Internetverbindung zwischen dem Kraftfahrzeug und einem Server des Internets aufgebaut werden kann.

Sobald man eine Landesgrenze überschreitet, verbinden sich die meisten SIM-Karten mit einem ausländischen Mobilfunknetzwerk und gehen in den sogenannten Roaming-Modus. In einem portablen mobilen Endgerät, wie beispielsweise einem Smartphone, kann dies durch eine Anzeige eines "R" auf dem Display oder dem Monitor angezeigt werden. Des Weiteren wird an die Mobilfunknummer der SIM-Karte eine Nachricht eines SMS (Short Message Service) von dem Betreiber des Mobilfunknetzwerks gesendet, um hierdurch den Benutzer der SIM-Karte darüber zu informieren, dass er nun das Mobilfunknetzwerk nutzt.

Um nach dem Wechsel in ein Mobilfunknetzwerk im Roaming-Modus zu vermeiden, dass ungewollt Kosten für eine Übertragung von Daten über eine Internetverbindung entstehen, sehen einige Mobilanbieter vor, die beschriebene Datenverbindung zu sperren, d.h. die Internetverbindung zu unterbrechen, und erst wieder freizuschalten, nachdem ein Benutzer sich auf einer Standard-Internetseite, einer sogenannten Landing-Page, den Zugang zum Internet wieder freigeschaltet hat, indem er zum Beispiel ein kostenpflichtiges Dienstleistungs-Paket gebucht hat. Erst nach Auswahl eines solchen Tarifs durch eine SMS-Nachricht oder durch Auswahl auf der Landing-Page funktioniert die Internetverbindung im Roaming-Modus.

Die Internetverbindung kann in einem Kraftfahrzeug unabhängig von einer Nutzereingabe ausschließlich durch ein Gerät oder mehrere Geräte des Kraftfahrzeugs selbst genutzt werden, die keine Möglichkeit haben, von sich aus eine Internetseite anzuzeigen oder zu bedienen. Dies kann beispielsweise bei einem Infotainmentsystem (Information-Unterhaltungssystem) zum Anzeigen von im Internet verfügbaren Verkehrsdaten oder Wetterdaten der Fall sein. Fährt nun ein Benutzer mit dem Kraftfahrzeug ins Ausland, bucht sich die SIM-Karte des Mobilfunkmoduls des Kraftfahrzeugs in ein anderes Mobilfunknetz ein und befindet sich somit im Roaming-Modus. Dadurch bricht die Internetverbindung ab und keiner der fahrzeugeigenen Dienste funktioniert mehr. Für den Benutzer ist dies aber nicht sofort erkennbar. Insbesondere erkennt er nicht den Grund dafür, dass der jeweilige Dienst keine aktuellen Daten mehr anzeigt oder bereitstellt.

Aus der DE 10 2012 213 619 A1 ist ein Verfahren bekannt, bei welchem ein Wechsel in ein Mobilfunknetzwerk im Roaming-Modus automatisch erkannt wird.

Aus der DE 10 2010 009 257 A1 ist bekannt, dass für ein Mobilfunkmodul mehrere Profile für die Nutzung von Mobilfunknetzen bereitgestellt werden können und bei wechseln in ein neues Mobilfunknetzwerk ein dazu passendes Profil ausgewählt werden kann, um Roaming-Gebühren zu verhindern.

Aus der DE 10 2015 108 793 A1 ist bekannt, dass bei einem mobilen Endgerät Roaming-Gebühren vermieden werden können, indem bei einem Wechsel in einen Roaming-Modus auf einen anderen Netzwerktyp ausgewichen wird, zum Beispiel eine WiFi-Verbindung.

Aus der US 2004/0203728 A1, der US 2013/0080618 A1 und der US 2012/0196618 A1 sind Verbindungstests zum Prüfen einer Kommunikationsverbindung bekannt. Aus der US 9,036,509 B1 ist ein Verfahren zum Weiterleiten von Datenpaketen bekannt, bei welchem überprüft wird, ob ein Routingpfad in einer Sackgasse ("dead end") endet. Aus der US 2012/0196564 A1 ist bekannt, dass festgestellt werden kann, ob ein mobiles Endgerät ein Roaming durchführt. Aus der US 2003/0069028 A1 ist ein mobiles Endgerät bekannt, dass abwechselnd unterschiedliche Mobilfunknummern ausprobiert, um einen Internetserver zu erreichen.

Gemäß Dokument US 2010/172312 A1 wird auf Grundlage einer Tabelle überprüft, ob ein Mobilfunknetzwerk eine Internetverbindung sperrt, und in diesem Fall die Mobilfunkverbindung zu dem Mobilfunknetzwerk erst gar nicht aufgebaut. Die Tabelle wird erzeugt, indem für jedes neue Mobilfunknetzwerk, zu dem in der Tabelle noch kein Eintrag existiert, probeweise versucht wird, eine Internetverbindung aufzubauen, und dann in Abhängigkeit von dem Ergebnis dieses Versuchs ein neuer Eintrag in der Tabelle erzeugt.

Der Erfindung liegt die Aufgabe zugrunde, in einem Kraftfahrzeug auf eine mögliche Störung einer Internetverbindung aufgrund einer Unterbrechung der Datenverbindung bei Roaming hinzuweisen.

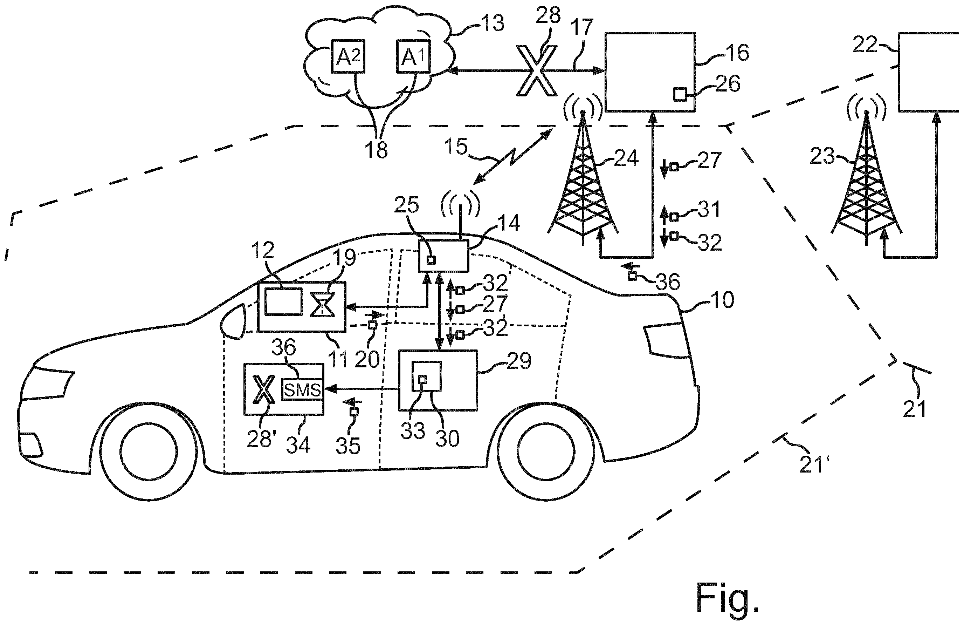

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist ein Verfahren zum Überwachen einer Internetverbindung bereitgestellt, die in einem Kraftfahrzeug mittels einer Mobilfunkverbindung bereitgestellt ist, die wiederum zwischen dem Kraftfahrzeug und einem Mobilfunknetzwerk aufgebaut ist. Anhand eines Roamingsignals wird erkannt, dass die Mobilfunkverbindung in einen Roaming-Modus oder Roaming-Betrieb geschaltet ist.

Um nun zu vermeiden, dass sich ein Benutzer weiterhin auf Daten verlässt, die durch zumindest ein Gerät des Kraftfahrzeugs angezeigt werden und auf der Grundlage von über die Internetverbindung bezogenen Daten aktualisiert werden sollten, ist erfindungsgemäß vorgesehen, dass durch eine Steuervorrichtung des Kraftfahrzeugs nach Empfangen des Roamingsignals ein vorbestimmter Verbindungstest zum Erkennen einer Unterbrechung der Internetverbindung durchgeführt wird. Bei Erkennen einer unterbrochenen Internetverbindung wird ein Hinweissignal an den Benutzer des Kraftfahrzeugs ausgegeben. Die Fehlermeldung kann zum Beispiel besagen, dass die Internetverbindung fehlgeschlagen ist. Falls der Verbindungstest ergibt, dass die Internetverbindung weiter besteht, wird bevorzugt keine Handlung oder kein Hinweissignal betreffend eine fehlgeschlagene Internetverbindung ausgegeben.

Durch die Erfindung ergibt sich somit der Vorteil, dass bei Empfangen eines Roamingsignals automatisiert durch die Steuervorrichtung überprüft wird, ob die Internetverbindung weiter besteht oder ob sie durch den Wechsel in das Mobilfunknetzwerk mit Roaming-Betrieb unterbrochen wurde. Die Unterbrechung kann zum Beispiel verursacht sein, weil der Betreiber des Mobilfunknetzwerks zunächst alle Anfragen für eine Internetverbindung auf die besagte Landing-Page umgelenkt, so dass kein anderer Server des Internets mehr erreichbar ist.

Unter der hier beschriebenen Internetverbindung ist im Zusammenhang mit der Erfindung keine vollständige Peer-to-Peer-Verbindung zu verstehen, sondern der Zugang von dem Mobilfunknetz in das Internet, wie er über ein GGSN (Gateway GPRS Support Node, GPRS - General Packet Radio Service) aus dem Mobilfunknetz heraus bereitgestellt werden kann.

Wie bereits ausgeführt, wird ein Hinweissignal an den Benutzer ausgegeben, welches den Benutzer über die fehlgeschlagene Internetverbindung informiert. Es ist erfindungsgemäß vorgesehen, dass bei Erkennen der unterbrochenen Internetverbindung eine Abrufeinrichtung zum Empfangen und Anzeigen einer aus dem Mobilfunknetzwerk bei Vorliegen des Roaming-Betriebs zu erwartenden Nachricht aktiviert wird. Eine solche Abrufeinrichtung kann zum Beispiel Bestandteil des Infotainmentsystems sein und zum Lesen von Nachrichten aus dem Mobilfunknetzwerk vorgesehen sein. Es kann sich zum Beispiel um ein Programmmodul handeln. Der Benutzer kann somit überprüfen, ob ihm eine Nachricht aus dem Mobilfunknetzwerk gesendet wurde, die den Roaming-Betrieb betreffen könnte. Dies ist im Zusammenhang mit der Erfindung auch als eine Form eines Hinweissignals zu verstehen.

Es wird eine Abrufeinrichtung für eine Nachricht eines SMS aktiviert, also eine Leseeinrichtung zum Lesen von SMS-Nachrichten. Die Abrufeinrichtung zeigt dann die Nachricht über eine Anzeigeeinrichtung in dem Kraftfahrzeug an. Die Anzeigeeinrichtung kann zum Beispiel ein Bildschirm z.B. in einer Mittelkonsole oder einem Kombiinstrument des Kraftfahrzeugs sein. Wie bereits eingangs beschrieben, ist eine solche SMS-Nachricht bei einem Wechsel in ein Mobilfunknetzwerk mit Roaming-Betrieb gesetzlich vorgeschrieben und somit beim Wechsel in das Mobilfunknetzwerk zu erwarten.

Zu der Erfindung gehören auch vorteilhafte Weiterbildungen, durch deren Merkmale sich zusätzliche Vorteile ergeben.

Der besagte Verbindungstest umfasst bevorzugt, dass eine vorbestimmte Anfragenachricht an zumindest eine vorbestimmte Internetadresse ausgesendet wird und überprüft wird, ob eine bei bestehender Internetverbindung zu erwartende, vorbestimmte Antwortnachricht innerhalb einer vorbestimmten Zeitdauer empfangen wird. Ist dies nicht der Fall, so wird entsprechend eine unterbrochene Internetverbindung erkannt. Die zumindest eine Internetadresse kann zum Beispiel in der Steuervorrichtung gespeichert sein.

Als Anfragenachricht kann zum Beispiel eine sogenannte Ping-Nachricht gemäß dem ICMP (Internet Control Message Protocol) ausgesendet werden. Bevorzugt ist aber vorgesehen, dass ein Abfragebefehl ausgesendet wird, wie er auch durch einen Internet-Browser zum Abrufen einer Internetseite erzeugbar ist. Mit einer Worten verhält sich die Steuervorrichtung bei dem Verbindungstest wie ein Internet-Browser. Hierdurch ergibt sich der Vorteil, dass selbst für den Fall, dass zum Beispiel eine Ping-Nachricht durch das Mobilfunknetzwerk oder einen Router gesperrt ist, dennoch eine bestehende Internetverbindung erkannt wird, wie sie zum Betreiben eines Internet Browsers benötigt wird.

Als Anfragenachricht wird entsprechend bevorzugt ein Befehl gemäß dem HTTP (Hypertext Transferprotokoll) oder dem HTTPS (Secure Hypertext Transferprotokoll) ausgesendet. Mit anderen Worten erfolgt als Verbindungstest zumindest ein HTTP-Aufruf oder ein HTTPS-Aufruf. Hierdurch wird überprüft, ob zumindest für das HTTP oder das HTTPS die Internetverbindung besteht, wodurch der wichtigste Verbindungstyp für Internetverbindungen geprüft ist.

Bevorzugt umfasst der Verbindungstest, dass eine jeweilige Anfragenachricht an zumindest zwei unterschiedliche Internetadressen ausgesendet wird. Dies führt in vorteilhafter Weise nicht zu einem falschen Alarm oder einer fehlerhaft als unterbrochen erkannten Internetverbindung, wenn aufgrund eines anderen Fehlers die Antwortnachricht von einer der Internetadressen ausbleibt, weil zum Beispiel der Server für diese Internetadresse ausgefallen ist. Dies bedeutet dann noch nicht, dass die Internetverbindung zwischen Kraftfahrzeug und Internet insgesamt unterbrochen ist.

Es kann vorgesehen sein, dass der Verbindungstest nur durchgeführt wird, falls in dem Kraftfahrzeug auch tatsächlich ein Internet-Browser und/oder eine Navigationseinrichtung und/oder ein Infotainmentsystem des Kraftfahrzeugs ein Time-Out-Signal beim Nutzen der Internetverbindung erzeugt hat. Hierdurch wird in vorteilhafter Weise der Verbindungstest nur bei Bedarf durchgeführt. Somit erhält der Benutzer das Hinweissignal nur für den Fall, dass tatsächlich die Internetverbindung genutzt wurde und/oder benötigt wird.

Wie bereits ausgeführt, gehört zu der Erfindung auch eine Steuervorrichtung für ein Kraftfahrzeug. Die Steuervorrichtung kann zum Beispiel als Steuergerät des Kraftfahrzeugs ausgestaltet sein. Die Steuervorrichtung weist eine Prozessoreinrichtung auf, die dazu eingerichtet ist, eine Ausführungsform des erfindungsgemäßen Verfahrens durchzuführen. Hierzu kann die Prozessoreinrichtung zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehört schließlich auch ein Kraftfahrzeug mit einem Mobilfunkmodul und mit einer Ausführung der erfindungsgemäßen Steuervorrichtung. Das Mobilfunkmodul kann zum Beispiel ein LTE-Funkmodul oder ein 5G-Funkmodul oder ein UMTS-Funkmodul sein. Das Funkmodul kann in der beschriebenen Weise einen SIM-Kartenslot aufweisen oder mit diesem gekoppelt sein, über welchen dann eine SIM-Karte eines Benutzers eingesteckt werden kann, um eine Mobilfunkverbindung mittels des Mobilfunkmoduls bereitzustellen.

Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich beispielsweise um einen Kraftwagen, insbesondere einen Personenkraftwagen, handeln kann. In dem Kraftfahrzeug 10 ist ein Gerät 11 bereitgestellt, welches Online-Daten 12 nutzt, d.h. Daten, die aus dem Internet 13 empfangen werden müssen.

Das Kraftfahrzeug 10 kann hierzu ein Mobilfunkmodul 14 aufweisen, welches zum Beispiel ein UMTS-Modul, ein LTE-Modul oder ein 5G-Modul sein kann. Mittels des Mobilfunkmoduls 14 kann von dem Kraftfahrzeug 10 aus eine Mobilfunkverbindung 15 zu einem Mobilfunknetzwerk 16 bereitgestellt werden. Über die Mobilfunkverbindung 15 kann aus dem Mobilfunknetzwerk 16 heraus eine Internetverbindung 17 bereitgestellt oder aufgebaut werden. Mit Internetverbindung ist hier gemeint, dass die Möglichkeit besteht, durch Angeben einer Internetadresse einen Server 18 des Internets aus dem Kraftfahrzeug 10 heraus anzusprechen oder zu kontaktieren oder mit diesem zu kommunizieren. Ein Server 18 des Internets kann ein Computer oder sogenannter Host sein. Während das Gerät 11 auf neue Online-Daten 12 aus dem Internet 13 wartet, kann eine Zeitmesseinheit 19 die Wartezeit auf neue Online-Daten oder eine Bestätigungsantwort für einen erfolgreichen Aufbau einer Kommunikationsverbindung zu einem Server 18 messen. Die Zeitmesseinheit 19 kann zum Beispiel ein Programmodul des Geräts 17 sein. Treffen keine neuen Online-Daten ein oder ist der Verbindungsaufbau fehlgeschlagen, so kann das Gerät 11 ein Time-Out-Signal 20 erzeugen.

Die Internetverbindung 17 kann durch folgenden Vorgang unterbrochen sein.

Das Kraftfahrzeug 10 kann sich während einer Fahrt aus einem Empfangsbereich 21 eines Mobilfunknetzwerks 22 heraus und in einen Empfangsbereichs 21' des Mobilfunknetzes 16 hinein bewegen, sodass eine Basisstation 23 des Mobilfunknetzwerks 22 die Funkverbindung zu dem Mobilfunkmodul 14 abbricht und eine Basisstation 24 des neuen Mobilfunknetzwerks 16 die Mobilfunkverbindung 15 zu dem Mobilfunkmodul 14 aufbaut. Bei dem Mobilfunknetzwerk 16 kann es sich um ein ausländisches Mobilfunknetzwerk handeln, d.h. eine SIM-Karte 25 des Mobilfunkmoduls 14 ist für Mobilfunknetzwerke 22 eines anderen Landes registriert. Somit wird die Mobilfunkverbindung 15 in einen Roaming-Betrieb 26 betrieben. Dies kann dem Mobilfunkmodul 14 durch ein Roamingsignal 27 signalisiert werden, welches das Mobilfunkmodul 14 im Kraftfahrzeug 10 bereitstellen kann. Das Mobilfunknetzwerk 16 kann bei Eintritt des Kraftfahrzeugs 10 und Aufbau der Mobilfunkverbindung 15 zu dem Mobilfunknetzwerk 16 eine Unterbrechung 28 der Internetverbindung 17 vorsehen. Das Gerät 11 kann dann nicht selbstständig neue Online-Daten 12 aus dem Internet 13 empfangen. Mit anderen Worten läuft die Zeitmesseinrichtung 19 aus, d.h. es gibt einen Time-Out. Somit wird das Time-Out-Signal 20 erzeugt.

Eine Steuervorrichtung 29 des Kraftfahrzeugs 10 kann in Abhängigkeit von dem Roamingsignal 27 überprüfen, ob durch das Mobilfunknetzwerk 16 die Unterbrechung 28 vorgesehen oder aktiviert ist. Hierzu kann die Steuervorrichtung 29 einen Verbindungstest 30 durchführen, der vorsehen kann, dass durch die Steuervorrichtung 29 zumindest eine Anfragenachricht 31 an eine jeweilige vorbestimmte Internetadresse A1, A2 eines jeweiligen Servers 18 im Internet 13 ausgesendet wird. Falls die Unterbrechung 28 nicht aktiv ist, erreicht die jeweilige Anfragenachricht 31 den Server 18 mit der jeweiligen Internetadresse A1, A2. Der Server 18 kann dann mit einer Antwortnachricht 32 antworten.

Bleibt die Antwortnachricht 32 für jede Internetadresse A1, A2 aber für eine vorbestimmte Zeitdauer 33 aus, so ist der Verbindungstest 30 fehlgeschlagen, d.h. es wird die Unterbrechung 28 der Internetverbindung 17 diagnostiziert oder festgestellt oder erkannt. Es kann dann an eine Anzeigeeinrichtung 34 ein Hinweissignal 35 durch die Steuervorrichtung 29 ausgegeben werden. Dem Benutzer kann somit beispielsweise durch einen Unterbrechungshinweis 28' angezeigt werden, dass eine Unterbrechung 28 der Internetverbindung 17 vorliegt.

Zusätzlich oder alternativ dazu kann als Hinweissignal zum Beispiel ein Leseprogramm für SMS-Nachrichten 36 aktiviert werden. Die Unterbrechung 38 muss durch das Mobilfunknetzwerk 16 nämlich als eine SMS-Nachricht 36 dem Benutzer des Mobilfunkmoduls 14 mitgeteilt werden. Somit wird die SMS-Nachricht automatisiert auf der Anzeigeeinheit 34 angezeigt. Der Benutzer kann dann gemäß den Anweisungen, wie sie in der SMS Nachricht 36 enthalten sein können, die Unterbrechung 28 der Internetverbindung 17 beseitigen oder aufheben.

Der Verbindungstest 30 kann auch in Abhängigkeit davon durchgeführt werden, ob das Time-Out-Signal 20 durch zumindest ein Gerät 11 des Kraftfahrzeugs 10 erzeugt wurde.

Der Benutzer bekommt somit insgesamt angezeigt, dass er nun keine Datenverbindung mehr hat, um überhaupt zu verstehen, weshalb das Gerät 11 keine aktuellen Online-Daten 12 mehr anzeigt. Da weltweit geregelt ist, dass alle Mobilfunkanbieter eine SMS-Nachricht versenden müssen um Kunden über einen Roaming-Betrieb 26 zu informieren, kann diese SMS-Nachricht ebenfalls angezeigt werden, wenn die Unterbrechung 28 der Internetverbindung 17 vorliegt. Der Benutzer kann dann die Datennutzung für das Mobilfunknetzwerk 16 aktivieren.

Somit wird der Benutzer automatisiert darauf hingewiesen, dass aktuell keine Internetverbindung mehr besteht, da im Roaming-Betrieb 26 zunächst die Unterbrechung 28 standardmäßig aktiviert wird und somit Dienste, wie sie durch das Gerät 11 bereitgestellt werden, eingestellte sind. Der Benutzer weiß nun, dass es keinen Fehler im Kraftfahrzeug gibt, sondern eine aktive Entscheidung von ihm selbst gefordert ist, einen Roaming-Tarif für Datenverbindungen zu buchen.

Der Verbindungstest 30 testet aktiv die Internetverbindung 17, indem als Anfragenachricht 31 zum Beispiel eine Ping-Nachricht und/oder einen http/https-Aufruf an zumindest eine vorbestimmte Internetadresse A1, A2 ausgesendet wird. Um einen Fehler bzw. Ausfall eines Servers 18 auszuschließen, werden bevorzugt zumindest zwei Anfragenachrichten 31 an unterschiedliche Server 18 ausgesendet oder abgesetzt. Sollte bei einer von beiden der Verbindungstest erfolgreich sein, so ist kein weiteres Handeln notwendig, da die Internetverbindung 17 besteht. Sollten aber zu allen Anfragenachrichten 31 die Antwortnachrichten 36 ausbleiben, obwohl eine Mobilfunkverbindung 15 zu dem Mobilfunknetzwerk 16 besteht, so ist die Blockade oder Unterbrechung 28 für die Datennutzung aktiv. Der Benutzer wird nun in der beschriebenen Weise informiert, dass keine Internetverbindung 17 mehr vorhanden ist und somit Geräte wie das Gerät 11, die die Online-Daten 12 aus dem Internet empfangen müssen, nicht mehr bestimmungsgemäß funktionieren können.

Wenn nun die SMS-Nachricht 36 eintrifft, die verpflichtend für den Hinweis auf den Roaming-Betrieb 26 ist, so kann dem Fahrer auf der Anzeigeeinheit 34 diese SMS-Nachricht 36 angezeigt werden. Es kann zum Beispiel bei Vorliegen mehrerer SMS-Nachrichten vorgesehen sein, dass die aktuellste SMS-Nachricht angezeigt wird.

Der Benutzer kann dann seine Entscheidung durch Antwort auf die SMS-Nachricht dem Mobilfunknetzwerk 16 mitteilen und somit eine Freischaltung der Internetverbindung 17 herbeiführen.

Insgesamt zeigt das Beispiel, wie durch die Erfindung eine Anzeige einer fehlenden Internetverbindung bei Roaming automatisiert erzeugt werden kann.

## Patentansprüche

1. Verfahren zum Überwachen einer Internetverbindung (17), die in einem Kraftfahrzeug (10) mittels einer zwischen einem Mobilfunkmodul (14) des Kraftfahrzeugs (10) und einem Mobilfunknetzwerk (16) aufgebauten Mobilfunkverbindung (15) bereitgestellt ist, wobei durch eine Steuervorrichtung (29) des Kraftfahrzeugs (10) ein vorbestimmter Verbindungstest (30) zum Erkennen einer Unterbrechung (28) der Internetverbindung (17) durchgeführt wird,
**dadurch gekennzeichnet, dass**
anhand eines Roamingsignals (27), durch welches dem Mobilfunkmodul (14) signalisiert wird, dass die Mobilfunkverbindung (15) in einem Roaming-Betrieb (26) betrieben wird, und welches das Mobilfunkmodul (14) in dem Kraftfahrzeug (10) bereitstellt, erkannt wird, dass die Mobilfunkverbindung (15) in einen Roaming-Betrieb (26) geschaltet ist, und durch die Steuervorrichtung (29) der Verbindungstest (30) nach Empfangen des Roamingsignals (27) durchgeführt wird und bei Erkennen einer unterbrochenen Internetverbindung (17) ein Hinweissignal (35) an einen Benutzer des Kraftfahrzeugs (10) ausgegeben wird, indem bei Erkennen der unterbrochenen Internetverbindung (17) eine Abrufeinrichtung zum Empfangen und Anzeigen einer aus dem Mobilfunknetzwerk (16) bei Vorliegen des Roaming-Betriebs (26) zu erwartenden Nachricht (36) aktiviert wird, wobei als Abrufeinrichtung eine Leseeinrichtung zum Lesen von SMS-Nachrichten aktiviert wird, welche die Nachricht (36) über eine Anzeigeeinrichtung (34) in dem Kraftfahrzeug (10) anzeigt.

2. Verfahren nach Anspruch 1, wobei der Verbindungstest (30) umfasst, dass eine vorbestimmte Anfragenachricht (31) an zumindest eine vorbestimmte Internetadresse (A1, A2) ausgesendet wird und überprüft wird, ob eine bei bestehender Internetverbindung (17) zu erwartende, vorbestimmte Antwortnachricht (32) innerhalb einer vorbestimmen Zeitdauer (33) empfangen wird.

3. Verfahren nach Anspruch 2, wobei als Anfragenachricht (31) eine Ping-Nachricht und/oder eine Abfragebefehl, wie er auch durch einen Internet-Browser zum Abrufen einer Internetseite erzeugbar ist, ausgesendet wird.

4. Verfahren nach Anspruch 2 oder 3, wobei als jeweilige Anfragenachricht (31) ein Befehl gemäß dem HTTP oder dem HTTPS ausgesendet wird.

5. Verfahren nach einem der vorhergehenden Ansprüche, wobei der Verbindungstest (30) umfasst, dass eine jeweilige Anfragenachricht (31) an zumindest zwei unterschiedliche Internetadressen (A1, A2) ausgesendet wird.

6. Verfahren nach einem der vorhergehenden Ansprüche, wobei der Verbindungstest (30) nur durchgeführt wird, falls ein Internet-Browser und/oder eine Navigationseinrichtung und/oder eines Infotainmentsystems (11) des Kraftfahrzeugs (10) ein Time-Out-Signal (20) beim Nutzen der Internetverbindung (17) erzeugt hat.

7. Steuervorrichtung (29) für ein Kraftfahrzeug (10), wobei die Steuervorrichtung (29) eine Prozessoreinrichtung aufweist, die dazu eingerichtet ist, ein Verfahren nach einem der vorhergehenden Ansprüche durchzuführen.

8. Kraftfahrzeug (10) mit einem Mobilfunkmodul (14) und mit einer Steuervorrichtung (29) nach Anspruch 7.

## Claims

1. Method for monitoring an internet connection (17) which is provided in a motor vehicle (10) by means of a mobile connection (15) established between a mobile module (14) of the motor vehicle (10) and a mobile network (16), wherein by means of a control device (29) of the motor vehicle (10) a predetermined connection test (30) is carried out for recognising an interruption (28) in the internet connection (17),
**characterised in that**
with the aid of a roaming signal (27) by means of which it is signalled to the mobile module (14) that the mobile connection (15) is operated in a roaming operating mode (26), and which the mobile module (14) in the motor vehicle (10) provides, it is recognised that the mobile connection (15) is switched into a roaming operating mode (26), and by means of the control device (29) the connection test (30) is carried out after receiving the roaming signal (27) and when an interrupted internet connection (17) is recognised an alert signal (35) is outputted to a user of the motor vehicle (10) **in that** when the interrupted internet connection (17) is recognised, a retrieving means is activated for receiving and displaying a message (36) to be expected from the mobile network (16) when roaming operating mode (26) is active, wherein as retrieving means a reading means for the reading of SMS messages is activated which displays the message (36) via a display device (34) in the motor vehicle (10).

2. Method according to claim 1, wherein the connecting test (30) comprises that a predetermined request message (31) is sent out to at least one predetermined internet address (A1, A2) and it is checked whether a predetermined answer message (32), to be expected in the case of an active internet connection (17), is received within a predetermined time duration (33).

3. Method according to claim 2, wherein as a request message (31) a Ping message and/or a query command, as can be generated also via an internet browser for calling up an internet page, is broadcast.

4. Method according to claim 2 or 3, wherein as a respective request message (31) a command according to HTTP or HTTPS is broadcast.

5. Method according to any of the preceding claims, wherein the connection test (30) comprises that a respective request message (31) is broadcast to at least two different internet addresses (A1, A2).

6. Method according to any of the preceding claims, wherein the connection test (30) is only carried out in the case that an internet browser and/or a navigation device and/or an infotainment system (11) of the motor vehicle (10) has generated a time-out signal (20) when using the internet connection (17).

7. Control device (29) for a motor vehicle (10), wherein the control device (29) has a processor device which is configured to carry out a method according to any of the preceding claims.

8. Motor vehicle (10) having a mobile module (14) and having a control device (29) according to claim 7.

## Revendications

1. Procédé de surveillance d'une liaison internet (17) qui est mise à disposition dans un véhicule automobile (10) au moyen d'une liaison de radiocommunication mobile (15) établie entre un module de radiocommunication mobile (14) du véhicule automobile (10) et un réseau de radiocommunication mobile (16),
dans lequel un test de liaison (30) prédéterminé est effectué par un dispositif de commande (29) du véhicule automobile (10) dans le but de détecter une interruption (28) de la liaison internet (17),
**caractérisé en ce que**, à l'aide d'un signal d'itinérance (27) par lequel est signalé au module de radiocommunication mobile (14) le fait que la liaison de radiocommunication mobile (15) fonctionne dans un mode de fonctionnement en itinérance (26) et que le module de radiocommunication mobile (14) met à disposition dans le véhicule automobile (10), est détecté le fait que la liaison de radiocommunication mobile (15) est commutée dans un mode de fonctionnement en itinérance (26) et le test de liaison (30) est effectué par le dispositif de commande (29) après la réception du signal d'itinérance (27) et, en cas de détection d'une liaison internet (17) interrompue, un signal d'avertissement (35) est délivré à un utilisateur du véhicule automobile (10) du fait que, en cas de détection de la liaison internet (17) interrompue, un dispositif d'appel destiné à recevoir et afficher un message (36) à attendre du réseau de radiocommunication mobile (16) en présence du mode de fonctionnement en itinérance (26) est activé, un dispositif de lecture destiné à la lecture de messages SMS étant activé comme dispositif d'appel, lequel dispositif de lecture affiche le message (36) via un dispositif d'affichage (34) dans le véhicule automobile (10).

2. Procédé selon la revendication 1, dans lequel le test de liaison (30) comprend le fait qu'on envoie un message de demande (31) prédéterminé à au moins une adresse internet (A1, A2) prédéterminé et qu'on vérifie si un message de réponse (32) prédéterminé, à attendre dans le cas d'une liaison internet (17) existante, est reçu dans les limites d'une durée (33) prédéterminée.

3. Procédé selon la revendication 2, dans lequel on envoie comme message de demande (31) un message Ping et/ou une instruction d'interrogation telle qu'elle peut aussi être produite par un navigateur internet pour appeler une page internet.

4. Procédé selon la revendication 2 ou 3, dans lequel on envoie comme message de demande (31) respectif une instruction selon le protocole HTTP ou le protocole HTTPS.

5. Procédé selon l'une quelconque des revendications précédentes, dans lequel le test de liaison (30) comprend le fait qu'un message de demande (31) respectif est envoyé à au moins deux adresses internet (A1, A2) différentes.

6. Procédé selon l'une quelconque des revendications précédentes, dans lequel le test de liaison (30) n'est effectué que si un navigateur internet et/ou un dispositif de navigation et/ou un système d'information-divertissement (11) du véhicule automobile (10) a produit un signal d'expiration de délai (20) lors de l'utilisation de la liaison internet (17).

7. Dispositif de commande (29) pour un véhicule automobile (10), lequel dispositif de commande (29) comporte un processeur qui est conçu pour mettre en oeuvre un procédé selon l'une quelconque des revendications précédentes.

8. Véhicule automobile (10) avec un module de radiocommunication mobile (14) et avec un dispositif de commande (29) selon la revendication 7.
